# EUROPÄISCHE PATENTSCHRIFT

(11) **EP 3 074 175 B1**
(45) Veröffentlichungstag und Bekanntmachung des Hinweises auf die Patenterteilung: **23.09.2020**
(21) Anmeldenummer: 14801932.6
(22) Anmeldetag: 14.11.2014
(51) Int. Cl.: B23Q 9/00, B23Q 17/22

(54) **WERKZEUGMASCHINE**
POWER TOOL
MACHINE-OUTIL

(30) Priorität: 26.11.2013 DE 102013224174
(43) Veröffentlichungstag der Anmeldung: 05.10.2016
(73) Patentinhaber: Gottfried Wilhelm Leibniz Universität Hannover, 30167 Hannover (DE)
(72) Erfinder: BROUWER, Dominik, 30938 Burgwedel (DE); DENKENA, Berend, 30900 Wedemark (DE); LITWINSKI, Kai Martin, 30161 Hannover (DE)
(74) Vertreter: Plöger, Jan Manfred
(86) Internationale Anmeldenummer: PCT/EP2014/003058
(87) Internationale Veröffentlichungsnummer: WO 2015/078562

(56) Entgegenhaltungen:
- EP-A2- 1 792 673
- EP-A2- 1 884 453
- DE-A1-102011 052 602
- FR-A1- 2 809 034
- FR-A1- 2 809 034
- FR-A1- 2 809 034
- FR-A1- 2 917 316
- US-A- 5 468 099
- US-A- 5 468 099
- US-A1- 2003 120 377
- US-A1- 2009 309 283
- US-A1- 2009 309 283

## Beschreibung

Die Erfindung betrifft eine Werkzeugmaschine gemäß dem Oberbegriff von Anspruch 1. Gemäß einem zweiten Aspekt betrifft die Erfindung ein Verfahren zum Bearbeiten eines Werkstücks.

Werkzeugmaschinen werden zum Bearbeiten, insbesondere zum abtragenden Bearbeiten, beispielsweise zum spanenden Bearbeiten, eingesetzt. Dazu wird ein Werkzeug, beispielsweise ein spanendes Werkzeug wie ein Fräser, ein Bohrer oder ein Drehmeißel, relativ zum Werkstück bewegt.

Zum Bewegen des Werkzeugs relativ zum Werkstück werden Maschinenachsen verwendet, beispielsweise Linearachsen. Je größer das Werkstück ist, desto länger muss die Maschinenachse sein, um die vollständige Ziel-Trajektorie abzufahren, die notwendig ist, um die vorgegebene Bearbeitung am Werkstück durchzuführen. Da auskragende Werkstücke relativ selten hergestellt werden müssen, ist deren Fertigung sehr aufwändig, weil eine Werkzeugmaschine mit großem Arbeitsraum vorgehalten werden muss, die nur selten Werkstücke fertigt, für die sie unabdingbar notwendig ist.

Aus der US 2010/0 186 210 A1 und der JP S57 33 946 A sind Werkzeugmaschinen bekannt, die an einem Werkstück befestigt werden, um dieses zu bearbeiten. Die Position der Werkzeugmaschine relativ zum Werkstück wird beispielsweise mittels eines Laser-Messsystems bestimmt. Nachteilig an derartigen Systemen ist, dass die Werkzeugmaschine spezifisch an die Struktur des Werkstücks angepasst werden muss. Schlanke Bauteile, wie sie zum Beispiel im Flugzeugbau eingesetzt werden, können so nicht bearbeitet werden.

Aus der EP 1 884 453 A2, der FR 2 809 034 A1, der DE 10 2011 052 602 A1, der EP 1 792 673 A2, der US 2003/0120377 und der FR 2 917 316 A1 sind gattungsgemäße Werkzeugmaschinen bekannt, bei denen Vortriebsvorrichtungen dazu verwendet werden, um Bearbeitungseinheiten relativ zu dem Werkstück zu positionieren. Nachteilig an diesen Lösungen ist die vergleichsweise aufwendige Konstruktion der Vortriebsvorrichtungen.

Die US 5 468 099 beschreibt einen Bohr-Roboter, der sich entlang einer Trennstelle zweier Bauteile eines Flugzeugs bewegt und Löcher für Niete bohrt. Um den Bohr-Roboter zu bewegen, sind zwei Sätze an Saugnäpfen vorhanden, die relativ zueinander bewegbar sind.

Der Erfindung liegt die Aufgabe zugrunde, die Fertigung von großen, schlanken Werkstücken zu verbessern.

Die Erfindung löst das Problem durch eine Werkzeugmaschine mit den Merkmalen von Anspruch 1.

Gemäß einem zweiten Aspekt löst die Erfindung das Problem durch ein Verfahren gemäß Anspruch 7.

Vorteilhaft an der Erfindung ist, dass in zumindest einer Raumrichtung große Werkstücke, beispielsweise spanend, bearbeitet werden können, ohne dass dazu lange Maschinenachsen notwendig sind. Es ist möglich, den Maschinenrahmen sukzessiv relativ zum Werkstück zu bewegen, und jeweils diejenigen Abschnitte des Werkstücks zu bearbeiten, die im Arbeitsraum liegen. Unter dem Arbeitsraum wird die Menge aller Punkte verstanden, die durch Ansteuern der Maschinenachsen bei fixiertem Maschinengestell bearbeitet werden können.

Ein weiterer Vorteil ist, dass Werkstücke, die in zumindest einer Raumrichtung eine Ausnehmung von mehr als 2 m, insbesondere mehr als 3 m haben, dennoch mit einer hohen Genauigkeit bearbeitet werden können. Die Bearbeitungsgenauigkeit hängt nämlich zum großen Teil von der Genauigkeit ab, mit der der Maschinenrahmen relativ zur Messvorrichtung eingemessen werden kann. Moderne Laserinterferometer sind in der Lage, auch die absolute Position im metrologischen Rahmen schnell und mit hoher Genauigkeit zu messen. Es ist daher möglich, die Position des Maschinenrahmens relativ zur Messvorrichtung mit einer Messgenauigkeit im Mikrometerbereich oder gar Sub-Mikrometerbereich zu bestimmen. Diese Messgenauigkeit ist so hoch, dass eine abschnittsweise Bearbeitung des Werkstücks auch bei mehrfachem Bewegen des Maschinenrahmens mit hoher Genauigkeit möglich ist.

Gemäß einer bevorzugten Ausführungsform umfasst die Messvorrichtung zumindest drei, insbesondere vier, nachführende Laserinterferometer, mittels denen Positionsänderungen des Werkzeugs ermittelbar sind. Besonders günstig ist es, wenn zumindest eines der Laserinterferometer, insbesondere alle Laserinterferometer, absolut messend sind.

Besonders vorteilhaft ist, dass die Größe der Bauteile prinzipiell nur durch die Reichweite des Messsystems begrenzt ist. Beispielsweise kann die erfindungsgemäße Werkzeugmaschine zum Bearbeiten von Schiffsrümpfen, Schiffswänden und sonstigen Schiffskomponenten verwendet werden. Es ist dazu lediglich notwendig, die Messvorrichtung an der Schiffskomponente hinreichend fest zu fixieren und in den Messrahmen-Koordinaten die Ziel-Trajektorie vorzugeben. Auf diese Weise können beispielsweise innen auf den Schiffsrumpf oder eine sonstige Schiffswand aufgetragene Beschichtungen auf eine vorgegebene Dicke abgetragen werden.

Vorteilhaft ist zudem, dass die Bearbeitung auch großer Werkstücke automatisiert erfolgen kann.

Im Rahmen der vorliegenden Beschreibung wird unter einer Werkzeugaufnahme insbesondere ein Element der Werkzeugmaschine verstanden, das ausgebildet ist zum Verbinden mit einem Werkzeug, insbesondere einem spanenden Werkzeug. Die Werkzeugaufnahme kann jedoch auch eine Aufnahme für einen Laserkopf oder einen Laserkopf selbst aufweisen, so dass die Werkzeugmaschine auch mittels eines Laserstrahls das Werkstück bearbeiten kann.

Unter dem Werkzeug wird insbesondere auch eine Vorrichtung zum additiven Fertigen verstanden. Selbstverständlich kann die Werkzeugaufnahme zum Aufnehmen von mehr als einem Werkzeug ausgebildet sein. Es ist zudem möglich, dass die Werkzeugmaschine zwei oder mehr Werkzeugaufnahmen umfasst. Sind mehrere Werkzeugaufnahmen vorhanden, können diese mittels der gleichen Maschinenachsen oder anderen Maschinenachsen zum Bewegen verbunden sein.

Insbesondere ist die Werkzeugmaschine ausgebildet zum abtragenden, insbesondere spanenden, Bearbeiten. Beim abtragenden Bearbeiten entstehen regelmäßig beachtliche Prozesskräfte, die abgeleitet werden müssen. Desgleichen werden hohe Anforderungen an die Formhaltigkeit des entstehenden Werkstücks gestellt. Aus diesem Grund ist bei bekannten Werkzeugmaschinen stets eine sehr starre Verbindung zwischen dem Maschinenbett und der Spindel vorgesehen. Lösbare Verbindungen wurden als zu weich angesehen, um die Anforderungen hinsichtlich der Genauigkeit erfüllen zu können.

Unter einer Maschinenachse wird insbesondere ein Bauelement der Werkzeugmaschine verstanden, mittels dem die Werkzeugaufnahme automatisch angetrieben geführt bewegbar ist. Insbesondere handelt es sich bei den Maschinenachsen um Linearachsen. Besonders günstig ist es, wenn die Werkzeugmaschine fünf Bearbeitungsachsen aufweist, so dass es sich um eine Fünfachs-Werkzeugmaschine handelt. Derartige Werkzeugmaschinen erlauben die Fertigung auch von komplex strukturierten Werkstücken.

Unter der Werkzeug-Trajektorie wird diejenige zeitliche Abfolge an Positionen verstanden, die die Werkzeugaufnahme durchlaufen muss, damit das Werkstück eine vorgegebene Ziel-Kontur erhält. Die Werkzeug-Trajektorie wird beispielsweise aus einem CAD-System generiert oder direkt in die Maschinensteuerung eingegeben.

Unter der Befestigungsvorrichtung wird eine Vorrichtung verstanden, mittels der der Maschinenraum und das Werkstück so relativ zueinander fixiert werden können, dass eine vorgegebene Bearbeitungsgenauigkeit eingehalten wird. Insbesondere ist die Befestigungsvorrichtung lösbar, das heißt, dass der Maschinenrahmen im gelösten Zustand der Befestigungsvorrichtung relativ zum Werkstück bewegbar ist.

Die Messvorrichtung ist vorzugsweise eine interferometrische Messvorrichtung. Besonders bevorzugt ist eine absolut messende interferometrische Messvorrichtung, wie sie beispielsweise in der EP 2 620 742 A1 beschrieben ist. Mit einem derartigen System ist es möglich, die absolute Position innerhalb des Maschinenrahmens schnell und mit sehr hoher Genauigkeit zu bestimmen.

Die Messvorrichtung ist zudem so ausgebildet, dass die Position des Werkstücks zum Maschinenrahmen ebenfalls bekannt ist. Die Koordinaten, mit denen die Position im metrologischen Rahmen bestimmt wird, werden Maschinenrahmen-Koordinaten genannt. Unter der Position eines Objekts wird die Gesamtheit aus Position und Orientierung eines Koordinatensystems, das mit dem jeweiligen Objekt verbunden ist, verstanden. Beispielsweise wird die Position des Maschinenrahmens im metrologischen Rahmen durch drei Längen und drei Winkel charakterisiert. Jede Kurve im mathematischen Sinn, die in Messrahmen-Koordinaten angegeben ist, lässt sich dann auf eine eindeutige Weise auf eine Werkzeug-Trajektorie in Maschinen-Koordinaten umrechnen.

Unter dem Merkmal, dass die Maschinensteuerung eingerichtet ist zum automatischen Durchführen der angegebenen Schritte, wird insbesondere verstanden, dass die Maschinensteuerung diese Schritte selbsttätig und ohne Eingreifen von außen durchzuführen vermag. Dazu umfasst die Maschinensteuerung beispielsweise einen digitalen Speicher, in den ein maschinenlesbares Programm abgelegt ist, das von der Maschinensteuerung automatisch abgearbeitet wird.

In einer bevorzugten Ausführungsform umfasst die Messvorrichtung ein Maschinenbett mit einer Vielzahl an Koppelpunkten und die Befestigungsvorrichtung weist eine Fixiervorrichtung, die am Maschinenrahmen befestigt und mit dem Nullpunktspannsystem lösbar verbindbar ist, auf. Die Fixiervorrichtung und die Koppelpunkte sind Teil eines Nullpunktspannsystems, so dass der Maschinenrahmen auf einer Vielzahl an Positionen mittels des Nullpunktspannsystems am Maschinenbett befestigbar ist. Unter einem Nullpunktspannsystem wird eine Vorrichtung verstanden, bei der zwei Spannpartner flächig und formschlüssig so miteinander interagieren, dass eine hohe Positioniergenauigkeit erreichbar ist. Ein Nullpunktspannsystem hat den Vorteil, dass die Position des Maschinenrahmens aus dem Nullpunktspannsystem, an dem es befestigt ist, mit hoher Genauigkeit bestimmbar ist. Insbesondere ist das Nullpunktspannsystem eingemessen, d. h., dass die die Positioniergenauigkeit bestimmenden Elemente des Nullpunktspannsystems in ihrer Position mit hoher Genauigkeit bekannt sind.

Die Befestigungsvorrichtung kann gemäß einer bevorzugten Ausführungsform zumindest einen Magneten umfassen, insbesondere einen Permanentmagneten und/oder einen Elektromagneten. Mit einer derartigen Befestigungsvorrichtung kann der Maschinenrahmen mit großen Befestigungskräften an einem elektromagnetischen Material befestigt werden. Das ist besonders günstig, wenn es sich bei dem Bauteil um ein Teil eines Schiffes handelt. Beispielsweise kann die erfindungsgemäße Werkzeugmaschine dann zum Bearbeiten eines Schiffrumpfes eingesetzt werden.

Vorzugsweise umfasst die Werkzeugmaschine eine Bewegungsvorrichtung zum selbsttätigen Bewegen des Maschinenrahmens. Beispielsweise besitzt die Bewegungsvorrichtung einen Kettenantrieb und/oder bewegbare Beine, mittels denen dass die Bewegungsvorrichtung durch eine insektenähnliche Bewegung den Maschinenrahmen an eine neue Position bringen kann.

Gemäß einer bevorzugten Ausführungsform ist die Maschinensteuerung eingerichtet zum automatischen Durchführen eines Verfahrens mit den Schritten: (i) nach dem Bearbeiten des Werkstücks Ansteuern der Bewegungsvorrichtung, so dass sich der Maschinenrahmen relativ zum Messrahmen bewegt, (ii) Fixieren des Maschinenrahmens relativ zum Messrahmen, (iii) Messen der neuen Position des Maschinenrahmens relativ zum Messrahmen und (iv) Errechnen der Werkzeug-Trajektorie im Maschinen-Koordinaten-System aus der vorgegebenen Ziel-Trajektorie in Messrahmen-Koordinaten.

Bei dem Messrahmen handelt es sich um ein Koordinatensystem, das vom Messsystem aufgespannt wird. Es handelt sich insbesondere nicht um ein reales Objekt. Vorteilhaft an einer derartig eingerichteten Werkzeugmaschine ist, dass sie ein einmal eingerichtetes Werkstück, das heißt ein Werkstück, dessen Position relativ zum Messrahmen bekannt ist, nach Vorgabe der Ziel-Trajektorie selbstständig abarbeiten kann, ohne dass dazu beispielsweise eine Portalfräsmaschine notwendig wäre.

Die Werkzeugmaschine besitzt ein Fixierwerkzeug zum Fixieren der Werkzeugaufnahme an einem Werkstück. Gemäß einer bevorzugten Ausführungsform besitzt das Fixierwerkzeug ein Gewinde. Es ist dann möglich, mittels der Werkzeugmaschine zunächst unter Verwendung eines Gewindeschneid-Werkzeugs ein Gewinde in das Werkstück zu schneiden, dann das Fixierwerkzeug in die Werkzeugaufnahme einzuwechseln und mit seinem Gewinde einzuschrauben. Nachfolgend kann die Befestigungsvorrichtung gelöst werden und der Maschinenrahmen kann durch Bewegen der Werkzeugaufnahme relativ zum Maschinenrahmen mittels der Maschinenachsen neu positioniert werden. Vorteilhaft hieran ist, dass die Bewegung des Maschinenrahmens relativ zum Werkstück ohne zusätzliche Antriebe bewerkstelligt werden kann.

Das Fixierwerkzeug ist ausgebildet zum Fixieren eines stehenden Teils der Spindel an dem Werkstück. Und zwar ist es auch möglich, dass die Drehachse der Spindel mittels des Fixierwerkzeugs befestigt wird, dass aber kann zu großen Kräften führen, die auf die Lager der Spindelwelle wirken. Es ist daher besonders günstig, wenn nicht die Spindelwelle, sondern das Gehäuse der Spindel mit dem Werkstück verbunden wird. Zum Gehäuse zählen insbesondere alle die Teile, die relativ zur Spindelwelle ruhen, wenn alle Maschinenachsen bewegt werden, nicht aber die Spindelwelle.

Erfindungsgemäß ist die Maschinensteuerung eingerichtet zum automatischen Durchführen eines Verfahrens mit den Schritten (i) Ansteuern des Fixierwerkzeugs, so dass die Werkzeugaufnahme am externen Objekt befestigt wird, (ii) Bewegen der Werkzeugaufnahme relativ zum Objekt, so dass sich der Maschinenrahmen relativ zum Objekt bewegt, und (iii) Fixieren des Maschinenrahmens relativ zum Objekt. Wenn es sich bei dem externen Objekt, wie gemäß einer bevorzugten Ausführungsform der Erfindung vorgesehen, um das Werkstück handelt, kann die Werkzeugmaschine danach die Bearbeitung des Werkstücks fortsetzen. So kann sich die Werkzeugmaschine am Werkstück entlanghangeln und Werkstücke bearbeiten, die deutlich größer sind als es ihr Bearbeitungsbereich eigentlich zulässt.

In anderen Worten nutzt diese Werkzeugmaschine ihre Maschinenachsen zur Fortbewegung relativ zum externen Objekt. Zur Bearbeitung des Werkstücks ist der Maschinenrahmen der Werkzeugmaschine relativ zum externen Objekt fixiert und die Werkzeugaufnahme bewegt sich zur Bearbeitung relativ zum externen Objekt. Zum Bewegen bewegt sich der Maschinenrahmen relativ zum externen Objekt und die Werkzeugaufnahme ist relativ zum externen Objekt fixiert.

Vorzugsweise umfasst diese Werkzeugmaschine (a) eine Messvorrichtung, die einen metrologischen Rahmen aufspannt und mittels der die Position des Maschinenrahmens relativ zur Messvorrichtung bestimmbar ist, wobei (b) die Maschinensteuerung eingerichtet ist zum automatischen Durchführen eines Verfahrens mit den Schritten: (i) Messen einer Position des Maschinenrahmens relativ zur Messvorrichtung, (ii) Errechnen der Werkzeug-Trajektorie im Maschinen-Koordinatensystem aus einer vorgegebenen Ziel-Trajektorie in Messrahmen-Koordinaten der Messvorrichtung und (iii) Bewegen des Werkzeugs entlang der Werkzeug-Trajektorie mittels der Maschinenachsen, so dass ein Werkstück bearbeitbar ist. Günstig ist zudem, wenn diese Werkzeugmaschine alternativ oder zusätzlich eines oder mehrere der oben genannten Merkmale aufweist.

Gemäß einer bevorzugten Ausführungsform umfasst die Werkzeugmaschine eine Vorrichtung zum additiven Fertigen, insbesondere einen Laserauftragkopf. Beispielsweise umfasst die Werkzeugaufnahme die Vorrichtung zum additiven Fertigen. Statt von additivem Fertigen könnte auch von generischem Fertigen gesprochen werden. Unter der Vorrichtung zum additiven Fertigen wird insbesondere eine Vorrichtung verstanden, mittels der zusätzlicher Werkstoff auf das Werkstück aufgebracht und dauerhaft mit diesem verbunden werden kann. Dabei beträgt die Festigkeit des zusätzlichen Werkstoffs vorzugsweise zumindest 80% der Festigkeit des Grundwerkstoffs des Werkstücks. Insbesondere ist der zusätzliche Werkstoff der gleiche wie der Grundwerkstoff. Vorteilhaft an einer Vorrichtung zum additiven Fertigen ist, dass durch sukzessives Auftragen von Material und gegebenenfalls nachfolgendem spanendem Nachbearbeiten das Werkstück hergestellt und/oder repariert werden kann.

Besonders vorteilhaft ist ein Laserauftragkopf. Hierunter ist eine Vorrichtung zu verstehen, mittels der kleinteiliges Material, beispielsweise Metallpulver, insbesondere Stahlpulver, Nickelpulver, Titanpulver, auf das Werkstück aufgebracht und mittels eines Laserstrahls mit dem Werkstück verbunden wird. Alternativ oder zusätzlich kann die Vorrichtung zum additiven Fertigen auch einen Auftragschweißkopf umfassen, der zum Auftragschweißen ausgebildet ist.

Gemäß einem bevorzugten Verfahren hat das Werkstück zumindest in einer Raumdimension eine Ausdehnung von zumindest drei Metern. Für derartige Werkstücke war bislang eine Portalfräsmaschine die Werkzeugmaschine der Wahl, die jedoch, wie oben beschrieben, aufwändig und kostenintensiv ist.

Besonders günstig ist es, wenn das Werkzeug ein Flugzeug-Spant oder ein Teil eines Schiffes ist. Derartige Bauteile sind in der Regel so groß, dass sie Spezial-Werkzeugmaschinen erfordern, die aufwändig und teuer sind.

Gemäß einer bevorzugten Ausführungsform umfasst die Werkzeugmaschine eine Oberflächentopographie-Erfassungsvorrichtung zum Erfassen einer Oberflächentopographie des Werkstücks, wobei die Maschinensteuerung eingerichtet ist zum automatischen Durchführen eines Verfahrens mit den Schritten: (i) Erfassen der Oberflächentopographie, (ii) Abgleichen der Oberflächentopographie mit einer Soll-Topographie, (iii) Erzeugen einer Werkzeugtrajektorie aus einem Unterschied zwischen Oberflächentopographie und Soll-Topographie und (iv) Bearbeiten des Werkstücks gemäß der Werkzeugtrajektorie. Beispielsweise umfasst die Oberflächentopographie-Erfassungsvorrichtung einen Laserscanner und/oder eine Streifenprojektionsvorrichtung.

Um ein Werkstück reparieren oder endfertigen zu können, muss bekannt sein, wo Material abgenommen und/oder hinzugefügt werden muss. Das wird durch die angegebenen Schritte erreicht. Das Abgleichen der Oberflächentopographie mit einer Soll-Topographie kann zum Beispiel dadurch erfolgen, dass diejenige Position der gemessenen Oberflächentopographie relativ zur Soll-Topographie ermittelt wird, bei der beide die kleinste Abweichung voneinander haben. Das ist beispielsweise dann der Fall, wenn die mittlere quadratische Abweichung im technischen Sinn minimal ist. Im technischen Sinn minimal soll bedeuten, dass eine Abweichung zur im mathematischen Sinne minimalen Lösung möglich ist.

Günstig ist es, wenn das erfindungsgemäße Verfahren den Schritt eines Herstellens eines Rohlings, insbesondere eines Gussrohlings, und eines Auftragschweißens des Rohlings umfasst. So können große Werkstücke effizient gefertigt werden. Durch ein Einmessen in den Maschinenrahmen kann die Außenkontur des Rohlings mit hoher Genauigkeit mit einer Werkzeugmaschine bearbeitet werden, deren Bearbeitungsraum kleiner ist als der Rohling. Vorstehende Strukturen müssen nicht im Guss hergestellt werden, sondern können durch Auftragschweißen, beispielsweise Laserauftragschweißen, hergestellt werden. Das Gesagte gilt auch für Drehteile.

Günstig ist es, wenn das erfindungsgemäße Verfahren die Schritte (i) Erfassen der Oberflächentopographie, (ii) Abgleichen der Oberflächentopographie mit einer Soll-Topographie, (iii) Erzeugen einer Werkzeugtrajektorie aus einem Unterschied zwischen Oberflächentopographie und Soll-Topographie und (iv) Bearbeiten des Werkstücks gemäß der Werkzeugtrajektorie umfasst. Die Vorteile dieses Verfahrens sind oben erläutert. Es eignet sich besonders zur Reparatur von Werkstücken aus Metall und/oder faserverstärktem Kunststoff, beispielsweise von Flugzeugteilen, Teilen von Windenergieanlagen und/oder Kraftfahrzeugteilen.

Erfindungsgemäß ist zudem ein Verfahren mit den folgenden Schritten:
(i) Bearbeiten eines Werkstücks, (ii) Ansteuern des Fixierwerkzeugs, so dass die Werkzeugaufnahme an einem externen Objekt, insbesondere dem Werkstück, befestigt wird, (iii) Bewegen der Werkzeugaufnahme relativ zum Maschinenrahmen, so dass sich der Maschinenrahmen (24) relativ zum Objekt bewegt, und (iv) Fixieren des Maschinenrahmens relativ zum Objekt. Danach wird das Werkstück beispielsweise weiter bearbeitet, insbesondere durch Spanen und/oder durch ein additives Verfahren.

Im Folgenden wird die Erfindung anhand der beigefügten Zeichnungen näher erläutert. Dabei zeigt
- Figur 1: eine schematische dreidimensionale Ansicht einer erfindungsgemäßen Werkzeugmaschine,
- Figur 2: zeigt einen Ausschnitt aus einem Maschinenbett der Werkzeugmaschine gemäß Figur 1,
- Figur 3: mit den Teilbildern 3a, 3b, 3c und 3d schematisch den Ablauf eines erfindungsgemäßen Verfahrens und
- Figur 4: die Darstellung eines erfindungsgemäßen Verfahrens gemäß einer dritten Ausführungsform.

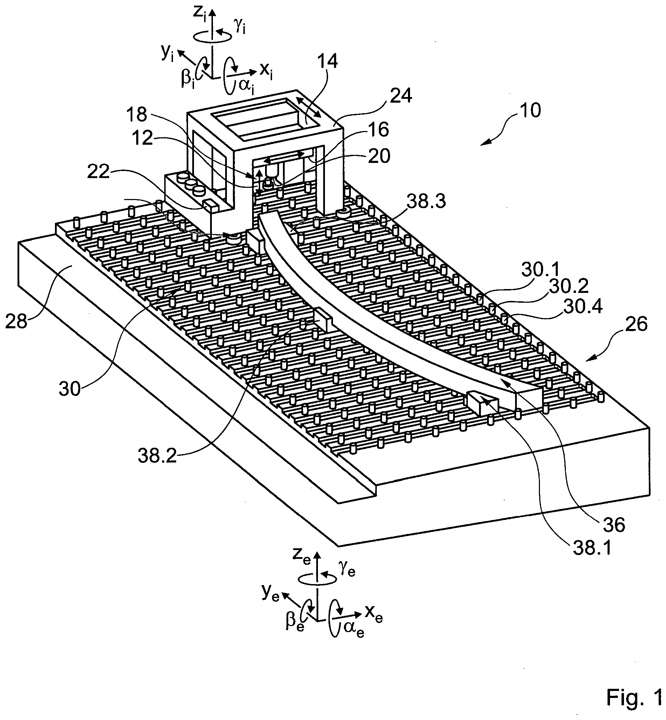

Figur 1 zeigt eine erfindungsgemäße Werkzeugmaschine 10 mit einer Werkzeugaufnahme 12, einer ersten Maschinenachse 14, einer zweiten Maschinenachse 16 und einer dritten Maschinenachse 18. Die Maschinenachsen 14, 16, 18 sind Linearachsen. Die Werkzeugmaschine 10 umfasst zudem zwei nicht eingezeichnete Drehachsen, so dass ein Werkzeug 20, das in der Werkzeugaufnahme 12 befestigt ist, in fünf Achsen bewegt werden kann.

Die Werkzeugmaschine 10 umfasst zudem eine Maschinensteuerung 22, die mit den Maschinenachsen 14, 16, 18 und weiteren Komponenten der Werkzeugmaschine 10 zum Ansteuern verbunden ist. Die Maschinenachsen 14, 16, 18 sind an einem Maschinenrahmen 24 befestigt, der im vorliegenden Fall im Wesentlichen quaderförmig ausgebildet ist. Es ist aber auch möglich, beliebige andere Formen zu wählen. Aus den Positionen der Maschinenachsen berechnet die Maschinensteuerung 22 die Position Lᵢ= (xᵢ, yᵢ, zᵢ, αᵢ, βᵢ, γᵢ) im Maschinen-Koordinatensystem. Der Index i bezieht sich darauf, dass das Maschinen-Koordinatensystem auch als internes Koordinatensystem bezeichnet werden kann.

Die Werkzeugmaschine 10 umfasst zudem eine Messvorrichtung 26, mittels der die Position Lₑ = (xₑ, yₑ, zₑ, αₑ, βₑ, γₑ) des Maschinenrahmens 24 in einem Messrahmen-Koordinatensystem ermittelbar ist. Der Index e bezieht sich darauf, dass das Messrahmen -Koordinatensystem auch als externes Koordinatensystem bezeichnet werden kann. Die Messvorrichtung 26 umfasst ein Maschinenbett 28 und eine Vielzahl an Koppelpunkten 30.1,30.2,30..., die im vorliegenden Fall am Maschinenbett 28 befestigt oder direkt an diesem ausgebildet sind.

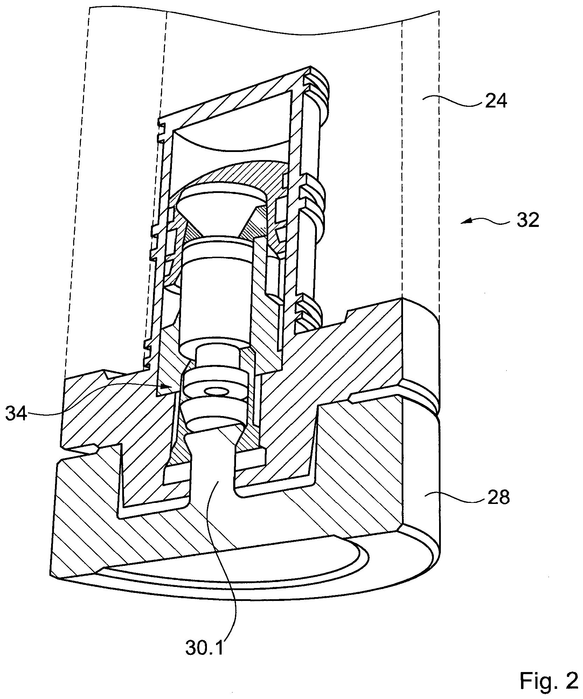

Figur 2 zeigt schematisch einen Ausschnitt aus dem Maschinenbett 28 mit dem Koppelpunkt 30.1. Die Werkzeugmaschine 10 umfasst zudem eine Befestigungsvorrichtung 32, die eine Fixiervorrichtung 34 umfasst. Die Fixiervorrichtung 34 ist ausgebildet zum lösbaren formschlüssigen Verbinden mit einem Koppelpunkt, hier dem Koppelpunkt 30.1. Der Koppelpunkt 30 (Bezugszeichen ohne Zählsuffix beziehen sich jeweils auf alle entsprechend gekennzeichneten Objekte) und die Fixiervorrichtung 34 sind gemeinsam Teil eines Nullpunktspannsystems. Mittels dieses Nullpunktspannsystems kann der Maschinenrahmen 24 mit einer hohen Reproduzierbarkeit relativ zum Maschinenbett 28 fixiert werden.

Die Position eines jeden Koppelpunkts 30 relativ zum Maschinenbett 28 ist durch ein vorheriges Einmessen, beispielsweise mit einem Laserinterferometer, mit hoher Genauigkeit bekannt, so dass die Position L₂₄ des Maschinenrahmens 24 ebenfalls mit hoher Genauigkeit bekannt ist, wenn dieser mittels des Nullpunktspannsystems am Maschinenbett befestigt ist.

Figur 1 zeigt zudem ein Werkstück 36, das mittels Spannvorrichtungen 38.1, 38.2, 38.3 am Maschinenbett 28 fixiert ist. Damit ist auch die Position des Werkstücks 36 in Messrahmen-Koordinaten bekannt.

In der Maschinensteuerung 22 ist eine Ziel-Trajektorie Z: Lₑ(t) = (xₑ(t), yₑ(t), zₑ(t), αₑ(t), βₑ(t), γₑ(t)) abgelegt, die angibt, in welcher Position Lₑ(t) das Werkzeug 20 beziehungsweise die Werkzeugaufnahme 12 zu einem vorgegebenen Zeitpunkt bezüglich einer Maschinenzeit t sein soll. Diese Ziel-Trajektorie Z ist in den Messrahmen-Koordinaten gegeben, die von der Messvorrichtung 26 ermittelt werden. Anhand der Position Lₑ₂₄ des Maschinenrahmens 24 in Messrahmen-Koordinaten wird aus der Ziel-Trajektorie Z durch Koordinaten-Transformationen eine Werkzeug-Trajektorie W: Lᵢ(t) = (xᵢ(t), yᵢ(t), zᵢ(t), αᵢ(t), βᵢ(t), γᵢ(t)) in Maschinen-Koordinaten errechnet. Die Maschinensteuerung 22 steuert die Maschinenachsen 14, 16, 18 sowie die gegebenenfalls zusätzlich vorhandenen weiteren Achsen so an, dass das Werkzeug die Werkzeug-Trajektorie abfährt.

Die Transformation geschieht beispielsweise durch die homogenen Transformationsmatrizen. Durch das Messsystem wird das Maschinenkoordinatensystem referenziert. Hierbei wird aus den Messsystemen die Rotation des Maschinenkoordinatensystems Lᵢ im Basis-/Messrahmenkoordinatensystem Lₑ durch die Rotationsmatrix Rᵢ bestimmt sowie die translatorische Verschiebung zwischen den Koordinatensystemen als tᵢ ermittelt. Der Positionsvektor im Maschinenkoordinatensystem ergibt sich zur rᵢ=[xᵢ(t) yᵢ(t) zᵢ(t)1]^{T} mit der 1 als Ergänzung für die homogene Transformation. Dieser errechnet sich aus der global berechneten Trajektorie rₑ=[xₑ(t) yₑ(t) zₑ(t)]^{T} als rᵢ(t)= [[Rᵢ0]^{T} [tᵢ1]^{T}]rₑ(t) und wird der Achsregelung des Maschinensystems zugeführt.

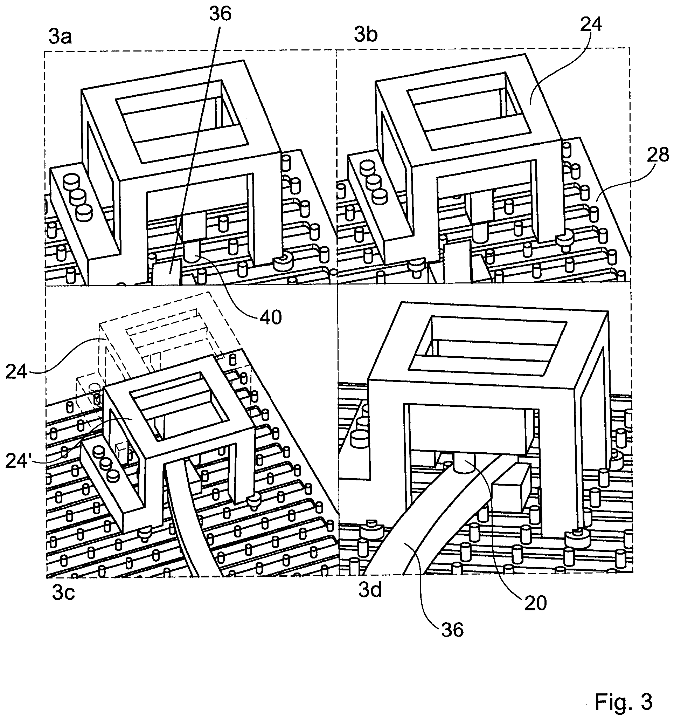

Figur 3 zeigt schematisch den Ablauf eines erfindungsgemäßen Verfahrens. Zunächst wird eine Position L_{e,36} des Werkstücks 36, wie in Figur 1 gezeigt, in Messrahmen-Koordinaten relativ zur Messvorrichtung 26 bestimmt. Wie oben beschrieben wird nachfolgend aus der Ziel-Trajektorie Z die Werkzeug-Trajektorie W bestimmt. Danach wird das Werkstück 36 mittels des Werkzeugs 20 bearbeitet, beim vorliegenden Fall gefräst, indem die Trajektorie W abgefahren wird. Während der Bearbeitung ist der Maschinenrahmen 24 mit zumindest drei, insbesondere vier oder mehr Fixiervorrichtungen mit jeweils einem Koppelpunkt 30 fest gekoppelt.

Sobald das Werkstück 36 in dem Bereich, in dem es in der momentanen Position im Maschinenrahmen 24 bearbeitbar ist, fertig bearbeitet ist, wird die Fixiervorrichtung 34 (siehe Figur 2) gelöst. Dazu wird das spanende Werkzeug, beispielsweise der Fräskopf, mittels eines nicht eingezeichneten Werkzeugwechslers gegen ein Fixierwerkzeug 40 ausgetauscht (siehe Teil-Figur 3a). Das Fixierwerkzeug 40 wird mit einem Koppelpunkt verkoppelt.

Teil-Figur 3b zeigt, wie der Maschinenrahmen 24 dadurch relativ zum Maschinenbett 28 verfahren wird, dass die Werkzeugaufnahme 12, die im vorliegenden Fall durch eine Spindel gebildet wird, relativ zum Maschinenrahmen 24 bewegt wird. Mit anderen Worten werden die Maschinenachsen 14, 16, 18 bewegt, so dass sich wegen des feststehenden Fixierwerkzeugs 40 der Maschinenrahmen 24 bewegt (siehe Teil-Figur 3c).

Nachdem eine vorgegebene Endposition erreicht ist, werden die Fixiervorrichtungen 34 mit anderen Koppelpunkten 30 verbunden. Da die Koppelpunkte bekannt sind, ist auch die neue Position des Maschinenrahmens 24 in Messrahmen-Koordinaten bekannt. Alternativ wird die neue Position des Maschinenrahmens 24 neu vermessen. Aus der neuen Position und der fest vorgegebenen Ziel-Trajektorie Z wird eine zweite Werkzeug-Trajektorie W2 berechnet und das Werkstück entsprechend dieser zweiten Werkzeug-Trajektorie W2 bearbeitet (siehe Figur 3d).

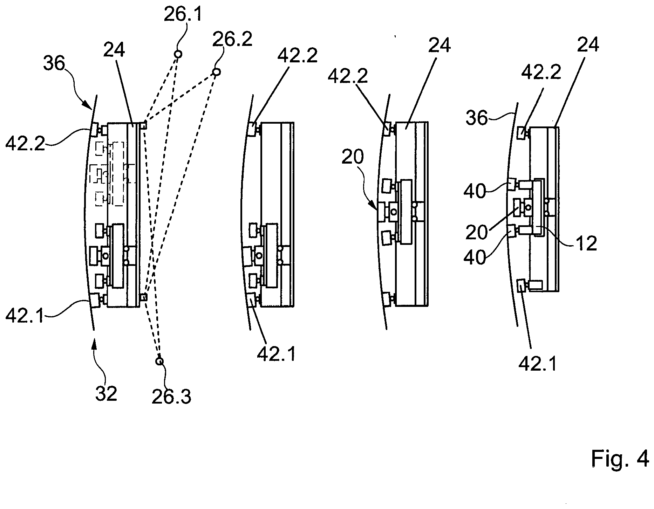

Figur 4 zeigt schematisch ein weiteres erfindungsgemäßes Verfahren, bei dem das Werkstück 36 eine Schiffswand ist. Die Befestigungsvorrichtung 32 umfasst mehrere Elektromagneten 42.1, 42.2, mittels derer der Maschinenrahmen 24 am Werkstück 36 befestigt ist.

Das linke Teilbild zeigt, dass die Messvorrichtung 26 drei Laserinterferometer 26.1, 26.2, 26.3 aufweist, die vorzugsweise absolut messen können und die Retroreflektoren anpeilen, die Teil des Maschinenrahmens 24 sind. Aus den Änderungen der optischen Weglängen der Laserstrahlen oder im Fall absolut messender Laserinterferometer direkt durch Triangulation wird die Position des Maschinenrahmens 24 in Messrahmen-Koordinaten bestimmt. Im zweiten und dritten Teilbild von links ist die Bearbeitung des Werkstücks 36 gezeigt.

Das rechte Teilbild zeigt den Zustand, in dem das Werkzeug 20 mit dem Werkstück 36 verbunden ist. Dazu ist das Fixierwerkzeug 40, das im vorliegenden Fall Elektromagnete 40 aufweist, am Werkstück 36 befestigt worden. Das Fixierwerkzeug 40 ist mit dem Gehäuse der Spindel, mittel der das Werkzeug 20 gedreht wird, verbunden. Nach Befestigen des Fixierwerkzeugs 40 wird Befestigungsvorrichtung 32 gelöst, beispielsweise indem die Elektromagnete 42.1 stromfrei geschaltet werden. Danach werden die Maschinenachsen so betätigt, dass der Maschinenrahmen 24 in eine vorgegebene neue Position kommt, und erneut mit der Befestigungsvorrichtung 32 am Werkstück 36 befestigt. Nachfolgend wird die neue Position des Maschinenrahmens 24 wie oben beschrieben gemessen, die Werkzeug-Trajektorie W berechnet und die Bearbeitung wird fortgesetzt.

### Bezugszeichenliste

- 10: Werkzeugmaschine
- 12: Werkzeugaufnahme
- 14: erste Maschinenachse
- 16: zweite Maschinenachse
- 18: dritte Maschinenachse

- 20: Werkzeug
- 22: Maschinensteuerung
- 24: Maschinenrahmen
- 26: Messvorrichtung
- 28: Maschinenbett

- 30: Koppelpunkt
- 32: Befestigungsvorrichtung
- 34: Fixiervorrichtung
- 36: Werkstück
- 38: Spannvorrichtung

- 40: Fixierwerkzeug
- 42: Elektromagnet

- Lₑ: Position in Messrahmen-Koordinaten
- Lᵢ: Position in Maschinen-Koordinaten
- Z: Ziel-Trajektorie
- W: Werkzeug-Trajektorie
- t: Zeit

## Patentansprüche

1. Werkzeugmaschine (10) mit
(a) einer Werkzeugaufnahme (12) in Form einer Spindel zum Aufnehmen eines Werkzeugs (20),
(b) zumindest drei Maschinenachsen (14, 16, 18) zum Positionieren der Werkzeugaufnahme (12),
(c) einer Maschinensteuerung (22), die ausgebildet ist zum Ansteuern der Maschinenachsen (14, 16, 18), so dass die Werkzeugaufnahme (12) auf einer in einem Maschinen-Koordinatensystem vorgebbaren Werkzeug-Trajektorie (W) bewegbar ist,
(d) einem Maschinenrahmen (24), an dem die Maschinenachsen (14, 16, 18) befestigt sind,
(e) einer Befestigungsvorrichtung (32), die ausgebildet ist zum Befestigen des Maschinenrahmens (24) und eines Werkstücks (36) relativ zueinander, und
(f) einer Messvorrichtung (26),
die einen metrologischen Rahmen aufspannt und
mittels der die Position des Maschinenrahmens (24) relativ zur Messvorrichtung (26) bestimmbar ist,
(g) wobei die Maschinensteuerung (22) eingerichtet ist zum automatischen Durchführen eines Verfahrens mit den Schritten:
(i) Messen einer Position des Maschinenrahmens (24) relativ zur Messvorrichtung (26),
(ii) Errechnen der Werkzeug-Trajektorie (W) im Maschinen-Koordinatensystem aus einer vorgegebenen Ziel-Trajektorie (Z) in Messrahmen-Koordinaten der Messvorrichtung (26) und
(iii) Bewegen des Werkzeugs (20) entlang der Werkzeug-Trajektorie (W) mittels der Maschinenachsen (14, 16, 18), so dass ein Werkstück (36) bearbeitbar ist,
**gekennzeichnet durch**
(h) ein Fixierwerkzeug (40) zum Fixieren eines stehenden Teils der Spindel der Werkzeugmaschine (10) am Werkstück (36).

2. Werkzeugmaschine (10) nach Anspruch 1, **gekennzeichnet durch** eine Bewegungsvorrichtung zum selbsttätigen Bewegen des Maschinenrahmens (24).

3. Werkzeugmaschine (10) nach Anspruch 2, **dadurch gekennzeichnet, dass** die Maschinensteuerung (22) eingerichtet ist zum automatischen Durchführen eines Verfahrens mit den Schritten:
- nach dem Bearbeiten des Werkstücks (36) Ansteuern der Bewegungsvorrichtung, so dass sich der Maschinenrahmen (24) relativ zum Messrahmen bewegt,
- Fixieren des Maschinenrahmens (24) relativ zum Messrahmen,
- Messen der neuen Position des Maschinenrahmens (24) relativ zum Messrahmen und
- Errechnen der Werkzeug-Trajektorie (W) im Maschinen-Koordinatensystem aus der vorgegebenen Ziel-Trajektorie (Z) in Messrahmen-Koordinaten und
- Bearbeiten des Werkstücks (36) anhand der Werkzeug-Trajektorie (W).

4. Werkzeugmaschine (10) nach einem der vorstehenden Ansprüche,
**dadurch gekennzeichnet, dass** die Maschinensteuerung (22) eingerichtet ist zum automatischen Durchführen eines Verfahrens mit den Schritten:
- Ansteuern des Fixierwerkzeugs (40), so dass die Werkzeugaufnahme (12) am externen Objekt (36) befestigt wird,
- Bewegen der Werkzeugaufnahme (12) relativ zum Maschinenrahmen (24), so dass sich der Maschinenrahmen (24) relativ zum Objekt (36) bewegt, und
- Fixieren des Maschinenrahmens (24) relativ zum Objekt (24).

5. Werkzeugmaschine (10) nach Anspruch 4, **gekennzeichnet durch** eine Vorrichtung zum additiven Fertigen, insbesondere einen Laserauftragkopf.

6. Werkzeugmaschine (10) nach einem der vorstehenden Ansprüche, **gekennzeichnet durch**
(a) eine Oberflächentopographie-Erfassungsvorrichtung zum Erfassen einer Oberflächentopographie des Werkstücks (36),
(b) wobei die Maschinensteuerung (22) eingerichtet ist zum automatischen Durchführen eines Verfahrens mit den Schritten:
- Erfassen der Oberflächentopographie,
- Abgleichen der Oberflächentopographie mit einer Soll-Topographie,
- Erzeugen einer Werkzeugtrajektorie aus einem Unterschied zwischen Oberflächentopographie und Soll-Topographie und
- Bearbeiten des Werkstücks (36) gemäß der Werkzeugtrajektorie.

7. Verfahren zum Bearbeiten eines Werkstücks (36), mit den Schritten:
(i) Bestimmen einer Position des Werkstücks (36) relativ zu einer Messvorrichtung (26) einer Werkzeugmaschine (10) nach einem der vorstehenden Ansprüche,
(ii) Festlegen einer Ziel-Trajektorie (Z) des Werkzeugs (20) in Messrahmen-Koordinaten der Messvorrichtung (26),
(iii) Befestigen des Maschinenrahmens (24) relativ zum Werkstück (36),
(iv) Bestimmen einer Position des Maschinenrahmens (24) relativ zur Messvorrichtung (26),
(v) Errechnen einer Werkzeug-Trajektorie (W) im Maschinen-Koordinatensystem aus der Ziel-Trajektorie (Z) und der Position des Maschinenrahmens (24),
(vi) Bearbeiten des Werkstücks (36) mittels des Werkzeugs (20),
(vii) Bewegen des Maschinenrahmens (24) relativ zum Werkstück (36),
(viii) Wiederholen der Schritte (iii) bis (vi), bis die Ziel-Trajektorie (Z) vollständig abgefahren ist.

8. Verfahren nach Anspruch 7, **dadurch gekennzeichnet, dass** das Werkstück (36) zumindest in einer Raumdimension eine Ausdehnung von zumindest 3 m hat.

9. Verfahren nach einem der Ansprüche 7 oder 8, **dadurch gekennzeichnet, dass** das Werkstück (36) ein Flugzeug-Spant oder ein Teil eines Schiffs ist.

10. Verfahren nach einem der Ansprüche 7 bis 9, **gekennzeichnet durch** die Schritte:
- Erfassen der Oberflächentopographie,
- Abgleichen der Oberflächentopographie mit einer Soll-Topographie,
- Erzeugen einer Werkzeugtrajektorie aus einem Unterschied zwischen Oberflächentopographie und Soll-Topographie und
- Bearbeiten des Werkstücks (36) gemäß der Werkzeugtrajektorie.

## Claims

1. A machine tool (10) with
(a) a tool accommodation (12) in the form of a spindle for accommodating a tool (20),
(b) at least three machine axes (14, 16, 18) for positioning the tool accommodation (12),
(c) a machine control system (22) that is designed to control the machine axes (14, 16, 18), so that the tool accommodation (12) can be moved on a tool trajectory (W) that can be predetermined in a machine coordinate system,
(d) a machine frame (24), to which the machine axes (14, 16, 18) are fixed,
(e) a fixing device (32) which is designed to fix the machine frame (24) and a workpiece (36) relative to one another, and
(f) a measurement device (26),
which sets out a metrological frame and
by means of which the position of the machine frame (24) relative to the measurement device (26) can be determined,
(g) wherein the machine control system (22) is configured to automatically execute a method featuring the steps:
(i) measurement of a position of the machine frame (24) relative to the measurement device (26),
(ii) calculation of the tool trajectory (W) in the machine coordinate system from a given target trajectory (Z) in measuring frame coordinates of the measurement device (26), and
(iii) movement of the tool (20) along the tool trajectory (W) by means of the machine axes (14, 16, 18), so that a workpiece can be machined,
**characterised by**
(h) a fixing tool (40) for fixing a stationary part of the spindle of the machine tool (10) on the workpiece (36).

2. The machine tool (10) according to claim 1, **characterised by** a movement device for automatically moving the machine frame (24).

3. The machine tool (10) according to claim2, **characterised in that** the machine control system (22) is configured to automatically execute a method containing the steps:
- following the machining of the workpiece (36), control of the movement device so that the machine frame (24) moves relative to the measuring frame,
- fixing of the machine frame (24) relative to the measuring frame,
- measurement of the new position of the machine frame (24) relative to the measuring frame, and
- calculation of the tool trajectory (W) in the machine coordinate system from the given target trajectory (Z) in measuring frame coordinates, and
- machining of the workpiece (36) using the tool trajectory (W).

4. The machine tool (10) according to one of the preceding claims, **characterised in that** the machine control system (22) is configured to automatically execute a method containing the steps:
- control of the fixing tool (40), so that the tool accommodation (12) is fixed on the external object (36),
- movement of the tool accommodation (12) relative to the machine frame (24), such that the machine frame (24) moves relative to the object (36), and
- fixing of the machine frame (24) relative to the object (24).

5. The machine tool (10) according to claim 4, **characterised by** a device for additive manufacturing, especially a laser application head.

6. The machine tool (10) according to one of the preceding claims, **characterised by**
(a) a surface topography detection device for detecting a surface topography of the workpiece (36),
(b) wherein the machine control system (22) is configured to automatically execute a method featuring the steps:
- detection of the surface topography,
- comparison of the surface topography with a target topography,
- generation of a tool trajectory from a difference between surface topography and target topography, and
- machining of the workpiece (36) according to the tool trajectory.

7. A method for machining a workpiece (36) comprising the steps:
(i) determination of a position of the workpiece (36) relative to a measurement device (26) of a tool machine (10) according to one of the preceding claims,
(ii) definition of a target trajectory (Z) of the tool (20) in measuring frame coordinates of the measurement device (26),
(iii) fixing of the machine frame (24) relative to the workpiece (36),
(iv) determination of a position of the machine frame (24) relative to the measurement device (26),
(v) calculation of a tool trajectory (W) in the machine coordinate system from the target trajectory (Z) and the position of the machine frame (24),
(vi) machining of the workpiece (36) using the tool (20),
(vii) movement of the machine frame (24) relative to the workpiece (36),
(viii) repetition of the steps (iii) to (vi) until the target trajectory (Z) has been completed.

8. The method according to claim 7, **characterised in that** the workpiece (36) has an extension of at least 3 m at least in one spatial direction.

9. The method according to one of the claims 7 or 8, **characterised in that** the workpiece (36) is an aircraft frame or part of a ship.

10. The method according to one of the claims 7 to 9, **characterised by** the steps:
- detection of the surface topography,
- comparison of the surface topography with a target topography,
- generation of a tool trajectory from a difference between surface topography and target topography, and
- machining of the workpiece (36) according to the tool trajectory.

## Revendications

1. Machine-outil (10) comportant
(a) un porte-outil (12) sous la forme d'une broche, pour la réception d'un outil (20),
(b) au moins trois axes de machine (14, 16, 18) pour le positionnement du porte-outil (12),
(c) une commande de machine (22), qui est réalisée pour piloter les axes de machine (14, 16, 18) de manière à ce que le porte-outil (12) puisse être déplacé sur une trajectoire d'outil (W) qui peut être prédéterminée dans un système de coordonnées de la machine,
(d) un cadre de machine (24) sur lequel sont fixés les axes de machine (14, 16, 18) ;
(e) un dispositif de fixation (32) réalisé pour fixer le cadre de machine (24) et une pièce à œuvrer (36) l'un par rapport à l'autre, et
(f) un dispositif de mesure (26),
qui définit un cadre métrologique et
au moyen duquel la position du cadre de machine (24) par rapport au dispositif de mesure (26) peut être déterminée,
(g) la commande de machine (22) étant adaptée pour mettre en oeuvre automatiquement un procédé comprenant les étapes consistant à :
(i) mesurer une position du cadre de machine (24) par rapport au dispositif de mesure (26),
(ii) calculer la trajectoire d'outil (W) dans le système de coordonnées de la machine à partir d'une trajectoire cible prédéfinie (Z) pour donner des coordonnées de cadre de mesure du dispositif de mesure (26) et
(iii) déplacer l'outil (20) le long de la trajectoire d'outil (W) au moyen des axes de machine (14, 16, 18) de manière à pouvoir usiner une pièce à œuvrer (36),
**caractérisée par** un
(h) un outil de fixation (40) pour fixer une partie stationnaire de la broche de la machine-outil (10) à la pièce à œuvrer (36).

2. Machine-outil (10) selon la revendication 1,
**caractérisée par**
un dispositif de déplacement pour déplacer automatiquement le cadre de machine (24).

3. Machine-outil (10) selon la revendication 2,
**caractérisée en ce que**
la commande de machine (22) est adaptée pour mettre en oeuvre automatiquement un procédé comprenant les étapes consistant à :
- après l'usinage de la pièce à œuvrer (36), piloter le dispositif de déplacement de manière que le cadre de machine (24) se déplace par rapport au cadre de mesure,
- fixer le cadre de machine (24) par rapport au cadre de mesure,
- mesurer la nouvelle position du cadre de machine (24) par rapport au cadre de mesure, et
- calculer la trajectoire d'outil (W) dans le système de coordonnées de la machine à partir de la trajectoire cible prédéfinie (Z) pour donner des coordonnées du cadre de mesure, et
- usiner la pièce à œuvrer (36) en se basant sur la trajectoire d'outil (W).

4. Machine-outil (10) selon l'une des revendications précédentes, **caractérisée en ce que**
la commande de machine (22) est adaptée pour mettre en œuvre automatiquement un procédé comprenant les étapes consistant à :
- piloter l'outil de fixation (40) de manière à ce que le porte-outil (12) soit fixé à l'objet externe (36),
- déplacer le porte-outil (12) par rapport au cadre de machine (24) de manière que le cadre de machine (24) se déplace par rapport à l'objet (36), et
- fixer le cadre de machine (24) par rapport à l'objet (36).

5. Machine-outil (10) selon la revendication 4,
**caractérisée par** un dispositif additif de fabrication, en particulier par une tête d'application laser.

6. Machine-outil (10) selon l'une des revendications précédentes, **caractérisée par**
(a) un dispositif de détection de la topographie de la surface pour détecter la topographie de la surface de la pièce à œuvrer (36),
(b) la commande de machine (22) étant adaptée pour mettre en œuvre automatiquement un procédé comprenant les étapes consistant à :
- détecter la topographie de la surface,
- comparer la topographie de surface avec une topographie de consigne,
- créer une trajectoire d'outil à partir d'une différence entre la topographie de la surface et la topographie de consigne, et
- usiner la pièce à œuvrer (36) en fonction de la trajectoire de l'outil.

7. Procédé d'usinage d'une pièce à œuvrer (36), comprenant les étapes consistant à :
(i) déterminer une position de la pièce à œuvrer (36) par rapport à un dispositif de mesure (26) d'une machine-outil (10) selon l'une des revendications précédentes,
(ii) définir une trajectoire cible (Z) de l'outil (20) pour donner des coordonnées du cadre de mesure du dispositif de mesure (26),
(iii) fixer le cadre de machine (24) par rapport à la pièce à œuvrer (36),
(iv) déterminer une position du cadre de machine (24) par rapport au dispositif de mesure (26),
(v) calculer une trajectoire d'outil (W) dans le système de coordonnées de la machine à partir de la trajectoire cible (Z) et de la position du cadre de machine (24),
(vi) usiner la pièce à œuvrer (36) au moyen de l'outil (20),
(vii) déplacer le cadre de machine (24) par rapport à la pièce à œuvrer (36),
(viii) répéter les étapes (iii) à (vi) jusqu'à ce que la trajectoire cible (Z) ait été complètement parcourue.

8. Procédé selon la revendication 7,
**caractérisé en ce que**
la pièce à œuvrer (36) a une extension d'au moins 3 m au moins dans une dimension spatiale.

9. Procédé selon l'une des revendications 7 ou 8,
**caractérisé en ce que**
la pièce à œuvrer (36) est une frette d'avion ou une partie d'un navire.

10. Procédé selon l'une des revendications 7 à 9,
**caractérisé par** les étapes consistant à :
- détecter la topographie de la surface,
- comparer la topographie de la surface avec une topographie de consigne,
- générer une trajectoire d'outil à partir d'une différence entre la topographie de la surface et la topographie de consigne, et
- usiner la pièce à œuvrer (36) selon la trajectoire d'outil.
